Europäisches Patentamt

European Patent Office

Office européen des brevets

(19)

(11) Veröffentlichungsnummer: **0 212 157**
**B1**

(12) EUROPÄISCHE PATENTSCHRIFT

(45) Veröffentlichungstag der Patentschrifft:
07.02.90

(21) Anmeldenummer: 86108887.0

(22) Anmeldetag: 30.06.86

(51) Int. Cl.$^5$: **B 22 D 25/04**

(54) Vorrichtung zum Giessen von Bleigittern für elektrische Akkumulatorenplatten und Verfahren zu ihrer Herstellung.

(30) Priorität: 20.08.85 DE 3529725
06.02.86 DE 3603657

(43) Veröffentlichungstag der Anmeldung:
04.03.87 Patentblatt 87/10

(45) Bekanntmachung des Hinweises auf die Patenterteilung:
07.02.90 Patentblatt 90/06

(84) Bennante Vertragsstaaten:
AT DE FR GB SE

(56) Entgegenhaltungen:
EP-A-0 065 996
DE-C-860 242
US-A-3 588 028

PATENT ABSTRACTS OF JAPAN, Band 5, Nr. 37 (M-58) 709 , 10. März 1981; & JP - A - 55 161 545 (MATSUSHITA DENKI) 16.12.1980

PATENT ABSTRACTS OF JAPAN, Band 8, Nr. 146 (M-307) 1583 , 7. Juli 1984; & JP - A - 59 42155 (ASAHI GLASS K.K.) 08.03.1983

GIESSEREITECHNIK, Band 19, Heft 12, 1973, Seiten 414-418, Berlin; J. STERNKOPF "Einsatzmöglichkeiten keramischer Überzüge in der metallurgischen Industrie"

(73) Patentinhaber: VARTA Batterie Aktiengesellschaft
Am Leineufer 51
D-3000 Hannover 21 (DE)

(72) Erfinder: Kallup, Bernhard E., Dr. Dipl.-Ing.
Bismarckallee 48
D-8750 Aschaffenburg (DE)

(74) Vertreter: Kaiser, Dieter Ralf, Dipl.-Ing.
Gundelhardtstrasse 72
D-6233 Kelkheim/Ts. (DE)

## Beschreibung

Die Erfindung betrifft eine Vorrichtung gemäß Oberbegriff des Anspruchs 1 zum Gießen von Bleigittern für elektrische Akkumulatorenplatten, die ein durch Spritzen aufgebrachtes keramisches Material enthält, dessen Oberfläche die Gießform bildet und in direkter Berührung mit dem in die Form einlaufenden Schmelzgut steht, und ein Verfahren zu ihrer Herstellung gemäß Oberbegriff des Anspruchs 3.

Akkumulatorengitter, insbesondere Startergitter, werden in zweigeteilten, aufklappbaren Gießformen hergestellt, in welcher das schmelzflüssige Blei aufgrund Schwerkraft oder Druckbeaufschlagung einströmt. Um die Adhäsion des Bleis an dem in der Regel aus Gußeisen bestehenden Formenwerkstoff zu vermindern und im Schwerkraftguß ein Abführen der Luft des Formenhohlraumes zu ermöglichen und einer zu raschen Abkühlung des Schmelzgutes entgegenzuwirken, wurden die Formen im Schwerkraftguß bislang mit einer dünnen Puderschicht aus Korkmehl oder Talkum versehen, die nach einer Standzeit von höchstens 5000 Guß verbraucht ist und nach einer zeitaufwendigen Reinigungsoperation erneuert werden muß.

Im Druckguß werden die Formen mit einer Trennschicht aus z. B. Rindertalg ausgestattet. Diese ist vor jedem Guß aufzubringen.

Ein größerer technischer Fortschritt wurde indessen gemäß EP-PS-65 996 mit der Auskleidung der ursprünglichen Metallgießform durch formgebende, temperaturbeständige Keramikplatten erzielt. Diese sind leicht auswechselbar und tragen wegen der Formtreue des keramischen Materials dem Filigran der dünnen Stege eines Startergitters in besonderer Weise Rechnung.

Aus der JP-A-55 161 545, auf welcher die Oberbegriffe der Ansprüche 1 und 3 basieren, ist es sogar bekannt, hochwarmfeste Keramikwerkstoffe wie $Al_2O_3$ oder $TiO_2$ mittels Plasmaspritzen als Schutzüberzug auf eine metallische Grundform aufzubringen.

Neben dem Plasmaspritzen wird in dem Aufsatz "Einsatzmöglichkeiten keramischer Überzüge in der metallurgischen Industrie" in der Zeitschrift "Gießereitechnik", 19. Jahrgang, Heft 12 (1973), Seite 415 ff auch das Flammspritzverfahren als Mittel zur Verarbeitung pulverförmiger Keramikwerkstoffe genannt. Ein Batteriefachmann entnimmt diesem Aufsatz jedoch keine Hinweise, die eine Anwendung dieser Techniken in dem Bereich des Gießens von Akkumulatorengittern empfehlen. Es werden nicht einmal Qualitätsunterschiede zwischen plasmagespritzten und flammgespritzten Schichten, z. B. hinsichtlich deren Porosität, erwähnt.

Andererseits hat die Praxis gezeigt, daß sich die konventionelle Korkmehlschicht dank ihrer Porosität gegenüber der vom Gießling verdrängten Luft wesentlich durchlässiger als bekannte Keramikeinlagen verhält. Die relativ geringe Wärmeisolation bekannter Keramikauskleidungen im Vergleich zur metallischen Grundform stellt ein neues Problem dar, nämlich das einer raschen und vor allem nicht genug differenzierten Wärmeabfuhr mit Hilfe der in die Grundform eingelassenen und von einem Kühlmedium durchflossenen Kanäle.

Der Erfindung liegt deshalb die Aufgabe zugrunde, auf unzweifelhaften Vorzügen eines keramischen Materials für Gießformen aufbauend, diese so auszugestalten, daß sich eine Form von hoher Verschleißbarkeit beim Gittergießen ergibt, die einen dem Gieß- und Erstarrungsvorgang rationell angepaßten Wärmehaushalt besitzt sowie eine gute Entformbarkeit des Gießlings und ein Entweichen der aus dem Formenhohlraum verdrängten Luft sicherstellt. Dabei soll auch das in die Gießform eingelaufene Schmelzgut in der Lage sein, sich ungeachtet unterschiedlicher Materialverteilung gleichmäßig abzukühlen.

Die Aufgabe wird erfindungsgemäß dadurch gelöst, daß das keramische Material eine hohe Porosität besitzt und durch Flammspritzen hergestellt ist.

Die erfindungsgemäße Maßnahme geht aus von dem Befund, daß im Gegensatz zum Elektro- oder Lichtbogenspritzen bzw. Plasmaspritzen durch Flammspritzen von Keramikmaterial wie Aluminiumoxid, Zirkonsilikat, Chromoxid oder Magnesiumaluminat, vorzugsweise aber von Zirkonoxid bei entsprechender Wahl der Prozeßparameter hochporöse Schichten erzeugt werden können. Auf die profilierten metallischen Gittergießformen aufgebracht oder als Einlegeteil ausgebildet, erweisen sich diese Schichten hinsichtlich der Funktionen "Trennen", "Isolieren" und "Luftführung" den Korkmehlschichten nicht nur als ebenbürtig, sondern zeichnen sich darüber hinaus durch den Vorteil einer nahezu unbegrenzten Standzeit im Produktionsprozeß aus. Die Gießformen arbeiten praktisch wartungsfrei.

Die Auftragung des Beschichtungsmaterials auf die profilierten metallischen Gittergießformen durch Flammspritzen erlaubt es außerdem, die Schichtdicke über den gesamten Formenhohlraum so zu differenzieren, daß sie in Bereichen von Materialanhäufungsstellen des Gitters wie Gitterrahmen und Ableiterfahnen gering ist und daher schlecht isoliert, in den Stegbereichen des Gitters dagegen dick ist und gut isoliert, so daß deren Abkühlungsgeschwindigkeit in zeitlichen Einklang mit derjenigen der massiveren Teile des Gitters gebracht wird. Die Dickenauslegung der Keramikschicht geschieht mittels Masken, die entsprechende Bereiche der metallischen Grundform abdecken und andere durch Löcher der Flammspritzbehandlung zugänglich machen. Auch kann durch Einlegeteile in der Gießform, die nicht benetzt werden, ein Abdeckeffekt erzielt werden. Wegen seiner sehr schlechten Wärmeleitfähigkeit, die etwa um die Hälfte geringer als bei den anderen weiter vorn genannten Keramikmaterialien ist, erreicht man mit Zirkonoxid bereits bei sehr geringer Auftragsstärke die gewünschte erfindungsgemäße Wirkung.

In manchen Fällen kann das Arbeiten mit Masken oder anderen Hilfsmaßnahmen jedoch umständlich sein. Eine besonders vorteilhafte Lösung, welche es einem Schmelzgut mit unterschiedlichen Materialanhäufungen erlaubt, sich über alle seine Bereiche hinweg mit weitgehend gleicher Geschwindigkeit abzukühlen, besteht dann darin, daß die flammgespritzte Keramikschicht durch mechanisches, materialabtragendes Bearbeiten der exakten Kontur des Gießteiles angepaßt wird.

Als für diesen Zweck geeignete Bearbeitungsmethoden kommen das Schleifen und die Ultraschallerosion infrage. Ihre Wirkung ist die, daß gerade an denjenigen Stellen der Keramikschicht, die formgebend für große Materialanhäufungen des Gießlings (z. B. Gitterrahmen) werden sollen, im Sinne der weiter vorn genannten Forderung zugleich Bereiche eines gewünschten guten Wärmedurchgangs entstehen, indem die Profile, die dort aus der Keramikschicht herauszuarbeiten sind, aufgrund ihrer Größe und Tiefe eine in ihrer Dicke stark reduzierte Schicht hinterlassen, so daß deren Wärmeisolation entsprechend herabgesetzt ist.

Umgekehrt ist die Dickenabtragung des Keramikmaterials dort gering, wo feine Konturen des Gießteiles ihre Negativ-Ausprägung durch Ausschleifen der Formenoberfläche erhalten sollen. Ein unerwünschter schneller Wärmeabfluß aus diesem Schmelzgutbereich, der zur Folge hätte, daß etwa die Gitterstege früher als die massiveren Teile des Elektrodengitters erstarren, wird durch die Isolationswirkung der dickwandigen Restschicht verhindert. Abgewendet ist damit auch die Gefahr, daß dünne Teile des Gießlings bereits erstarren, ehe die Schmelze beim Gießvorgang die feinen Kavitäten der Gießform vollständig ausgefüllt hat, so daß die verbliebenen Hohlräume mit noch schmelzflüssigem Blei aus den Räumen größerer Schmelzgutanhäufung nicht mehr versorgt werden können.

Die Haftung der Keramikschicht auf der Grundform läßt sich verbessern, indem man letztere vor dem Flammspritzen sandstrahlt. Darüber hinaus kann, um die thermische Zyklisierbarkeit des Formenwandmaterials zu erhöhen, eine Grundierung mit einer Legierungsschicht von großem Vorteil sein. Diese besteht z. B. aus einer Chrom-, Kobalt- oder Nickelbasislegierung und läßt sich entweder galvanisch auf die metallische Grundform aufplattieren oder auch flammspritzen.

Anstatt während des Flammspritzens der Keramik die Grundform zwecks Herstellung unterschiedlicher Schichtdicken zu maskieren, kann dies bereits während des Sandstrahlens und gegebenenfalls Plattierens geschehen, da die hierbei abgedeckten Stellen vergleichsweise schlecht benetzbar bleiben und so der späteren Flammspritzbehandlung weniger als ihre Umgebung zugänglich sind. Eine Beschichtung in diesen Bereichen ist erst in einem weiteren Schritt nach einem erneuten Sandstrahlen möglich.

Das Flammspritzen gemäß der Erfindung ermöglicht es auch, die Form und verschiedene Einlegeteile wie z. B. vent bars getrennt zu beschichten und erst im Anschluß an diese Fertigungsschritte zusammenzusetzen. Damit ist es möglich, die Entlüftungsspalte zwischen Form und vent bars aufrecht zu erhalten und dadurch die Wirkungsweise der Entlüftungssysteme nicht zu beeinträchtigen. Auch können Entlüftungslöcher durch nachträgliches Aufbohren oder durch Entfernen von vor dem Beschichten eingesetzten, von der Keramikschicht nicht benetzten Stiften hergestellt werden.

Anhand einiger Figurendarstellungen wird die Erfindung in ihren verschiedenen Ausführungsformen verdeutlicht.

Figur 1 zeigt schematisch eine oberflächenbeschichtete Gittergießform.

Figur 2 zeigt schematisch den Herstellungsgang eines erfindungsgemäßen Einlegeteils für den metallischen Formträger.

Figur 3 zeigt den erfindungsgemäßen Herstellungsgang einer flammgespritzten keramischen Gittergießform, ausgehend von einem bereits ein Grobprofil des Gießteils aufweisenden Formen-Grundmaterial.

Figur 4 zeigt einen modifizierten Herstellungsgang, ausgehend von einem ebenen Formen-Grundmaterial.

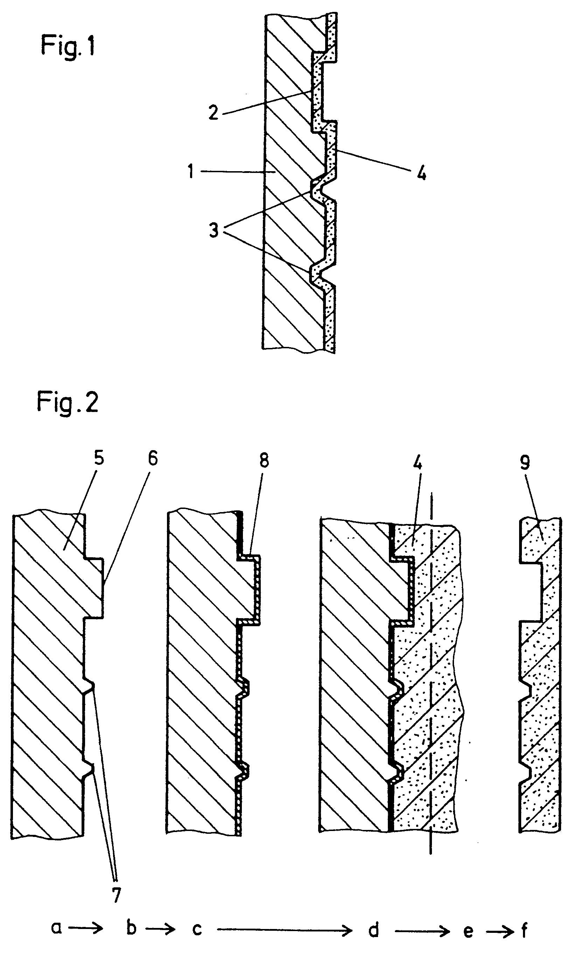

Nach Figur 1 sind in die Oberfläche der metallischen Gießform 1 (Formen-Grundmaterial) Vertiefungen 2, 3 eingraviert, welche die Negativformen für den Gitterrahmen bzw. für die Gitterstege darstellen. Die Profilseite der Gießform ist gleichmäßig von einer flammgespritzten Keramikschicht 4 abgedeckt.

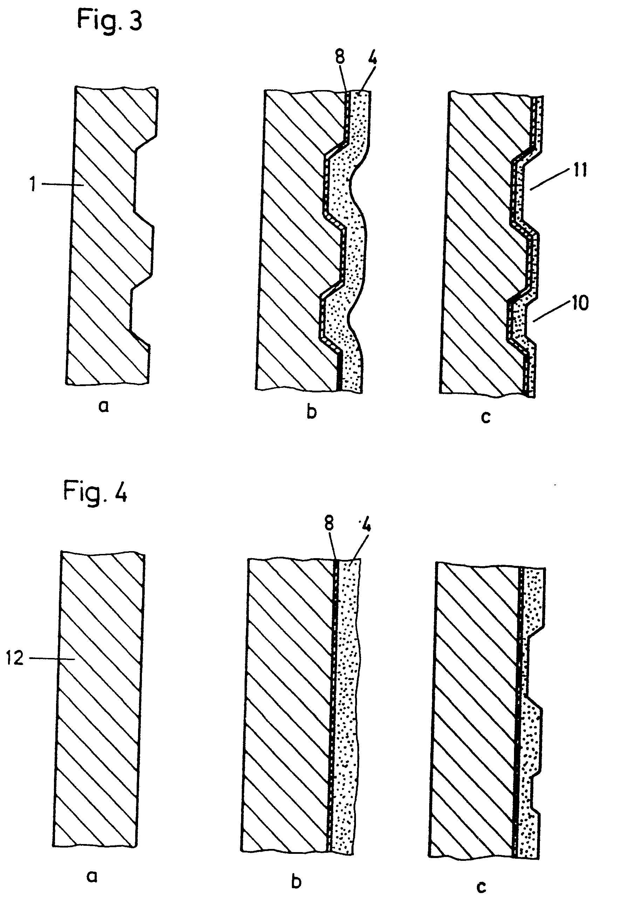

In einer alternativen Ausführungsform der Erfindung nach Figur 2 bildet das Keramikmaterial aus sich allein die komplette Gießform, indem diese ein in einem metallischen Träger gehaltenes Einsatzteil darstellt.

Die Figur zeigt schematisch den Herstellungsgang einer derartigen Einlegeplatte.

Die Herstellung beginnt mit dem Anfertigen einer metallischen Matrize 5 oder Positivform, deren Oberflächenkontur mit dem Gitterrahmen 6 und Gitterstegen 7 einem Halbprofil des zu gießenden Bleigitters entspricht: Stadium a. Die Matrize wird gesandstrahlt (Stadium b) und zur Vorbereitung für die Keramikbeschichtung mit einer dünnen Haftschicht 8 aus einer leicht schmelzenden Legierung oder einem chemisch leicht auflösbaren Material überzogen, was wiederum durch Flammspritzen oder Elektroplattieren erfolgen kann: Stadium c. In Stadium d entsteht durch Auftragen der Keramik 4 nach dem Flammspritzverfahren das spätere Einsatzteil, wobei die Auftragsdicke die Profiltiefe des Bleigitters wesentlich übersteigen muß, damit sich nach egalisierendem Planschleifen (gestrichelte Linie) und dem Ablösen der Schicht von der Matrize, z. B. durch Aufschmelzen der Legierung 8 (Stadium e), im Fertigstadium f eine mechanisch stabile, hochporöse Einlegeplatte 9 ergibt. Sie stellt als Negativform das von einer metallischen Trägerplatte zu haltende, erfindungsgemäße Einsatzteil dar.

Die metallischen Trägerplatten sind mit Heiz- und Kühlsystemen sowie Formentlüftungssystemen bestückt und werden in die Formaufnahmen der Gießmaschinen eingebaut.

Setzte das metallische Formen-Grundmaterial bei den eben beschriebenen Ausführungen bereits ein exakt ausgearbeitetes Oberflächenprofil voraus, dem sich die relativ dünne Keramikbeschichtung anpaßt, so bauen die nachstehenden Formen auf einem erst grob konturierten Grundmaterial auf.

Gemäß Figur 3 bildet ein Formträger 1 aus z. B. Gußeisen als Formen-Grundmaterial, dem eine zweigeteilte aufklappbare Gießform zugrundeliegt und der bereits ein vergrößertes Negativ-Profil des zu fertigenden Gießteils besitzt, die Basis für das Aufbringen der keramischen Gießform (Stadium a).

Unter Vermittlung einer dünnen, die Haftung verbessernden Schicht 8, der eine gesandstrahlte Oberfläche zugrundeliegt, wird der Formträger durch Flammspritzen mit dem keramischen Material 4, vorzugsweise Zirkonoxid, beschichtet (Stadium b). Das ursprüngliche Oberflächenprofil des Formträgers ist durch den Schichtauftrag weitgehend verwischt.

Durch mechanisches Bearbeiten, vorzugsweise durch Schleifen, der Schichtoberfläche werden nunmehr die Vertiefungen auf das exakte Maß getrimmt. Daraus resultiert aber, daß unter dem dünnen Gitterstegprofil 10 eine Restbeschichtung aus dem Keramikauftrag von wesentlich größerer Dicke zurückbleibt als unter dem großen Profileinschnitt 11 z. B. des Gitterrahmens, daß mithin beim Gießen der dünne Steg vor dem Auskühlen besser geschützt ist (Endstadium c).

Gemäß Figur 4 baut der Herstellungsgang der keramischen Gießform auf einem Formenträger 12 mit ebener Oberfläche auf (Stadium a). Entsprechend ist der durch Flammspritzen erzeugte und durch Haftschicht 8 gebundene keramische Schichtauftrag 4 eben und gleichmäßig dick (Stadium b). Aus dieser Schicht wird dann die Negativ-Form des Gießlings, wiederum vorzugsweise durch Schleifen, exakt herausmodelliert (Endstadium c).

Wie man aus der Figur erkennt, ergibt sich auch in diesem Fall eine Gießform mit einer Wanddickenverteilung, die dem Problem einer differenzierten Wärmeabführung nach Maßgabe der Schmelzgutverteilung in vollkommener Weise Rechnung trägt.

## Patentansprüche

1. Vorrichtung zum Gießen von Bleigittern für elektrische Akkumulatorenplatten, bei welcher durch Auftragen eines hitzebeständigen keramischen Materials auf eine metallische Grundform mittels thermischen Spritzens eine Keramikschicht erzeugt ist, welche die Gießform bildet und deren Oberfläche in Berührung mit dem in die Form einlaufenden Schmelzgut steht, dadurch gekennzeichnet, daß zwischen der metallischen Grundform und der durch Flammspritzen auf diese aufgebrachten Keramikschicht eine ebenfalls durch Flammspritzen oder galvanische Abscheidung aufgebrachte, die Haftung der Keramikschicht verbessernde Schicht aus einer Chrom-, Kobalt- oder Nickelbasislegierung angeordnet ist.

2. Vorrichtung nach Anspruch 1, dadurch gekennzeichnet, daß das zum Flammspritzen ausgewählte Keramikmaterial Aluminiumoxid, Zirkonsilikat, Chromoxid oder Magnesiumaluminat, vorzugsweise jedoch Zirkonoxid ist.

3. Verfahren zur Herstellung einer Vorrichtung zum Gießen von Bleigittern für elektrische Akkumulatorenplatten, bei welchem durch Auftragen eines hitzebeständigen keramischen Materials auf eine metallische Grundform mittels thermischen Spritzens eine Keramikschicht erzeugt wird, welche die Gießform bildet und deren Oberfläche in Berührung mit dem in die Form einlaufenden Schmelzgut steht, nach Anspruch 1 dadurch gekennzeichnet, daß die metallische Grundform vor dem Aufbringen der Keramik zusätzlich durch Flammspritzen oder galvanische Abscheidung mit einer die Haftung der Keramikschicht verbessernden Schicht aus einer Chrom-, Kobalt- oder Nickelbasislegierung plattiert wird.

4. Verfahren nach Anspruch 3, dadurch gekennzeichnet, daß die flammgespritzte Keramikschicht durch mechanisches materialabtragendes Bearbeiten, insbesondere durch Schleifen oder Ultraschallerorsion, der exakten Kontur des Gießteils angepaßt wird.

5. Verfahren nach Anspruch 3 oder 4, dadurch gekennzeichnet, daß zur Erzielung einer unterschiedlichen Dickenverteilung der Keramikschicht zwecks rascherer Wärmeableitung aus Materialanhäufungsstellen des Gitters wie Gitterrahmen und Ableiterfahnen, hingegen besserer Wärmedämmung an den dünnen Gitterstegen die Oberfläche der metallischen Grundform im Bereich der Anhäufungsstellen während des Plattierens durch Masken abgedeckt wird.

6. Verfahren nach Anspruch 3, dadurch gekennzeichnet, daß eine metallische Matrize, deren Oberflächenkontur einem Halbprofil des zu gießenden Bleigitters entspricht, gesandstrahlt und durch Flammspritzen oder galvanische Abscheidung mit einer Haftschicht aus einer niedrigschmelzenden Legierung oder einem chemisch leicht auflösbaren Material versehen wird, daß auf die haftvermittelnde Schicht durch Flammspritzen ein keramisches Material in einer die Profiltiefe des Bleigitters wesentlich übersteigenden Schichtdicke aufgetragen wird, daß die freiliegende Oberfläche der Keramikschicht durch Planschleifen geglättet wird und daß die Keramikschicht als integrales Teil von der Matrize abgelöst, von anhaftenden Resten der haftvermittelnden Schicht gereinigt und als Einsatzteil in die metallische Grundform eingelegt wird.

## Claims

1. Apparatus for casting lead grids for electrical accumulator plates, in which apparatus a heat-resistant ceramic material is applied to a metal base mould by means of heat spraying to produce a ceramic layer which forms the casting mould and whereof the surface is in contact with the melt flowing into the mould, characterized in that there is arranged between the metal base mould and the ceramic layer applied thereon by flame spraying a layer comprising a chromium-, cobalt- or nickel-based alloy, this layer also being applied by flame spraying or galvanic deposition and improving the adhesion of the ceramic layer.

2. Apparatus according to claim 1, characterized in that the ceramic material selected for flame spraying is alumina, zirconium silicate, chromium oxide or magnesium aluminate, but preferably zirconia.

3. Process for producing an apparatus for casting lead grids for electrical accumulator plates, in which process a heat-resistant ceramic material is applied to a metal base mould by means of heat spraying to produce a ceramic layer which forms the casting mould and whereof the surface is in contact with the melt flowing into the mould, according to claim 1, characterized in that before the ceramic is applied the metal base mould is additionally plated by flame spraying or galvanic deposition with a layer comprising a chromium-, cobalt- or nickel-based alloy and improving the adhesion of the ceramic layer.

4. Process according to claim 3, characterized in that the flame-sprayed ceramic layer is adapted to the exact contour of the casting by a mechanical material-removing machining, in particular by grinding or ultrasonic machining.

5. Process according to claim 3 or 4, characterized in that, to achieve a differing thickness distribution of the ceramic layer for the purpose of more rapid heat dissipation from places of material accumulation of the grid, such as grid frame and conductor vanes, and on the other hand better protection against loss of heat at the thin grid webs, the surface of the metal base mould is screened by masks during the plating in the region of the places of accumulation.

6. Process according to claim 3, characterized in that a metal female mould whereof the surface contour corresponds to a half profile of the lead grid to be cast is sand blasted and provided by flame spraying or galvanic deposition with an adhesive layer comprising a low-melting alloy or an easily chemically dissolved material, in that a ceramic material is applied to the adhesion-promoting layer in a layer thickness substantially exceeding the profile depth of the lead grid by flame spraying, in that the exposed surface of the ceramic layer is smoothed by surface grinding, and in that the ceramic layer is peeled from the female mould as an integral part, cleaned of adhering residues of the adhesion-promoting layer and inserted in the metal base mould as an insert.

## Revendications

1. Dispositif pour couler des grilles en plomb pour des plaques d'accumulateurs électriques, dispositif dans lequel, en déposant par projection thermique un matériau céramique résistant à la chaleur sur une forme métallique de base, on obtient une couche de céramique qui constitue le moule de coulée et dont la surface est en contact avec le produit fondu entrant dans le moule, dispositif caractérisé en ce qu'entre la forme métallique de base et la couche de céramique déposée sur elle par projection à la flamme, est disposée une couche en un alliage à base de chrome, de cobalt ou de nickel, améliorant l'adhérence de la couche de céramique et également déposée par projection à la flamme ou par galvanoplastie.

2. Dispositif selon la revendication 1, caractérisé en ce que le matériau céramique choisi pour la projection à la flamme est de l'oxyde d'aluminium, du silicate de zirconium, de l'oxyde de chrome, ou de l'aluminate de magnésium, mais de préférence de l'oxyde de zirconium.

3. Procédé pour réaliser un dispositif permettant de couler des grilles en plomb pour des plaques d'accumulateurs électriques, procédé dans lequel, en déposant par projection thermique un matériau céramique résistant à la chaleur sur une forme métallique de base, on obtient une couche de céramique qui constitue le moule de coulée et dont la surface est en contact avec le produit fondu entrant dans le moule, selon la revendication 1, procédé caractérisé en ce que la forme métallique de base, avant le dépôt de la céramique, est en outre placée par projection à la flamme ou par galvanoplastie, avec une couche en un alliage à base de chrome, de cobalt ou de nickel, améliorant l'adhérence de la couche de céramique.

4. Procédé selon la revendication 3, caractérisé en ce que la couche de céramique projetée à la flamme est adaptée au contour exact de la pièce de coulée par usinage mécanique avec enlèvement de matériau, notamment par meulage ou érosion par ultrasons.

5. Procédé selon la revendication 3 ou 4, caractérisé en ce que, pour obtenir une répartition en épaisseur différente de la couche de céramique, dans le but d'évacuer plus rapidement la chaleur à partir des emplacements où s'accumule le matériau de la grille, tels que le cadre de la grille et les cosses de prise de courant, ou par contre dans le but d'assurer un meilleur amortissement thermique sur les fines nervures de la grille, la surface de la forme métallique de base est recou- verte, pendant le placage, par des masques dans la zone des emplacements d'accumulation du matériau.

6. Procédé selon la revendication 3, caractérisé en ce qu'une matrice métallique, dont le contour superficiel correspond à un demi-profil de la grille en plomb à couler, est sablée et munie, par projection à bas point de fusion ou en un matériau facilement soluble chimiquement, et en ce que sur cette couche assurant l'adhérence, un matériau céramique est rapporté par projection à la flamme en une épaisseur de couche dépassant notablement la profondeur du profil de la grille en plomb, puis la surface libre de la couche de céramique est lissée par rectification plane, et la couche de céramique est enlevée dans son intégralité de la matrice, débarrassée des résidus de la couche assurant l'adhérence, et mise en place dans la forme métallique de base en tant que pièce d'insertion.

EP 0 212 157 B1

Fig.1

2

1

4

3

Fig.2

5    6         8         4         9

7

a → b → c → d → e → f

1

Fig. 3

1

8  4

11

10

a          b          c

Fig. 4

12

8  4

a          b          c